(19) Europäisches Patentamt
European Patent Office
Office européen des brevets

(11) **EP 2 598 387 B1**

## (12) EUROPÄISCHE PATENTSCHRIFT

(45) Veröffentlichungstag und Bekanntmachung des Hinweises auf die Patenterteilung:
**25.11.2015 Patentblatt 2015/48**

(21) Anmeldenummer: **11736016.4**

(22) Anmeldetag: **25.07.2011**

(51) Int Cl.:
*B60T 8/36* (2006.01)      *B60T 8/90* (2006.01)
*B60T 8/40* (2006.01)

(86) Internationale Anmeldenummer:
**PCT/EP2011/003722**

(87) Internationale Veröffentlichungsnummer:
**WO 2012/013328 (02.02.2012 Gazette 2012/05)**

(54) **VERFAHREN ZUM BETREIBEN EINES ELEKTRISCH STEUERBAREN BREMSSYSTEMS UND GEMÄSS DEM VERFAHREN BETRIEBENES BREMSSYSTEM**

METHOD OF OPERATING AN ELECTRICALLY CONTROLLABLE BRAKE SYSTEM AND BRAKE SYSTEM WHICH IS OPERATED ACCORDING TO THE METHOD

PROCÉDÉ DE FONCTIONNEMENT D'UN SYSTÈME DE FREINAGE COMMANDÉ ÉLECTRIQUEMENT ET SYSTÈME DE FREINAGE METTANT EN ŒUVRE LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2010 DE 102010032929**

(43) Veröffentlichungstag der Anmeldung:
**05.06.2013 Patentblatt 2013/23**

(73) Patentinhaber: **Lucas Automotive GmbH 56070 Koblenz (DE)**

(72) Erfinder:
• **KNECHTGES, Josef 56727 Mayen (DE)**
• **HELLER, Frank 56154 Boppard (DE)**
• **BACH, Thomas 56332 Wolken (DE)**

(74) Vertreter: **Schmidt, Steffen Wuesthoff & Wuesthoff Patentanwälte PartG mbB Schweigerstrasse 2 81541 München (DE)**

(56) Entgegenhaltungen:
WO-A1-95/19282          WO-A1-2005/054028
DE-A1- 10 221 456        DE-A1- 10 247 651
DE-A1-102005 026 740    DE-A1-102006 029 160

**Beschreibung**

Die Erfindung betrifft ein Verfahren zum Betreiben eines elektrisch steuerbaren Bremssystems für ein Kraftfahrzeug mit einem Hauptzylinder zum Erzeugen eines ersten Bremsdruckes, einer elektrisch angesteuerten Pumpe zum Erzeugen eines zweiten Bremsdruckes, und wenigstens einer elektrisch angesteuerten Ventilanordnung zum Einstellen einer Druckdifferenz zwischen dem zweiten Bremsdruck und dem ersten Bremsdruck, und ebenso ein Verfahren zum Betreiben eines elektrisch steuerbaren Bremssystems für ein Kraftfahrzeug mit Radzylindern, in denen ein erster Bremsdruck erzeugt wird, einer elektrisch angesteuerten Pumpe zum Erzeugen eines zweiten Bremsdruckes, und wenigstens einer elektrisch angesteuerten Ventilanordnung zum Einstellen einer Druckdifferenz zwischen dem zweiten Bremsdruck und dem ersten Bremsdruck. Auch betrifft die Erfindung ein elektrisch steuerbares Bremssystem, das gemäß solchen Verfahren betrieben wird.

Aus der DE 102 47 651 A1 ist ein elektrisch steuerbares Bremssystem bekannt, bei dem sowohl die Absperrventile eines jeden Bremskreises, die zwischen dem Hauptzylinder und Ausgang der Pumpe angeordnet sind, als auch die den Radbremsen zugeordneten Einlassventile, die zwischen dem Ausgang der Pumpe und dem jeweiligen Radzylinder angeordnet sind, als elektrisch angesteuerte Ventilanordnungen ausgebildet sind, die zum Einstellen einer Druckdifferenz ausgebildet sind. Eine derartige Ventilanordnung ist aus der DE 44 39 890 A1 bekannt. Weiterhin ist aus der DE 10 2005 026 740 A1 ein Verfahren zur Ansteuerung einer derartigen Ventilanordnung bekannt, gemäß dem eine möglichst genaue Einstellung der Druckdifferenz erfolgt, so dass auch möglichst genaue Bremsdrücke erzeugt werden, um insbesondere bei automatischen Bremsungen einen komfortablen Ablauf, beispielsweise ohne ruckartige Bewegungen und/oder Schiefziehen des Fahrzeugs, zu erreichen. Weitere Bremssystems sind aus den Dokumenten WO 95/19282 A1; DE 10 2006 029 160 A1, DE 102 21 456 A1; WO 2005/054028 A1 bekannt.

Das Einstellen eines Sollwertes für die Druckdifferenz und darüber das Erzeugen bzw. Einstellen der gewünschten Bremsdrücke erfolgt üblicherweise in Abhängigkeit von der elektrischen Ansteuerung der Ventilanordnung. Dazu wird beispielsweise in der elektronischen Steuereinheit des Bremssystems ein Kennfeld hinterlegt, gemäß dem die Druckdifferenz als Funktion des der Ventilanordnung zugeführten elektrischen Stromes gesteuert bzw. geregelt werden kann.

Dabei besteht das Problem, dass der funktionale Zusammenhang zwischen Druckdifferenz und elektrischer Ansteuerung starken Streuungen unterliegen kann, die sich aus den Fertigungstoleranzen der beteiligten hydraulischen, mechanischen sowie elektr(on)ischen Systemkomponenten ergeben. Hinzu kommen Toleranzen, die sich aus dem Alterungsprozess bzw. Verschleiß der Systemkomponenten im Betrieb ergeben.

Es ist daher Aufgabe der Erfindung dem geschilderten Problem entgegenzuwirken. Zur Lösung der Aufgabe wird zum Betreiben eines zuvor erwähnten, elektrisch steuerbaren Bremssystems vorgeschlagen, dass in einem ersten Zeitintervall eine vorbestimmte erste Druckdifferenz eingestellt und eine zugehörige erste Leistungsaufnahme der Pumpe ermittelt wird; in einem zweiten Zeitintervall eine vorbestimmte zweite Druckdifferenz eingestellt und eine zugehörige zweite Leistungsaufnahme der Pumpe ermittelt wird; aus der ersten Leistungsaufnahme und der zweiten Leistungsaufnahme ein Korrekturwert ermittelt wird; der Korrekturwert zum Einstellen eines Sollwertes für die Druckdifferenz berücksichtigt wird.

Zudem wird zur Lösung der Aufgabe das in Anspruch 15 definierte elektrisch steuerbare Bremssystem vorgeschlagen.

Auf diese Weise wird ein Kalibrieren des Bremssystems vorgenommen, wobei sich das Funktionsprinzip wie folgt gestaltet. Das Ermitteln der Leistungsaufnahme der Pumpe erfolgt mittels des die Pumpe antreibenden Elektromotors, der als Wandler von elektrischer Energie in mechanische Energie fungiert. Denn die mechanische Energie, die zum Antreiben der Pumpe als Last erforderlich ist, muss als elektrische Energie zugeführt werden. Dabei erzeugt der Elektromotor bauartbedingt eine bestimmte Drehzahl und gibt ein bestimmtes Drehmoment ab. Wird die Last verändert, indem die Druckdifferenz verändert wird, so verändert sich die Drehzahl entsprechend, wenn die zugeführte elektrische Energie unverändert bleibt. Dies bedeutet, dass die Drehzahl abfällt, wenn die Last durch Erhöhen der Druckdifferenz erhöht wird, und dass die Drehzahl ansteigt, wenn die Last durch Verringern der Druckdifferenz verringert wird. Nun kann die Veränderung der Drehzahl durch Veränderung der zugeführten elektrischen Energie wieder ausgeglichen bzw. ausgeregelt werden. Heißt, dass um einen Drehzahlabfall auszugleichen, die elektrische Energiezufuhr erhöht, und dass um einen Drehzahlanstieg auszugleichen, die elektrische Energiezufuhr verringert werden muss. Dies alles spiegelt sich in der Leistungsaufnahme der Pumpe bzw. des die Pumpe antreibenden Elektromotors wider.

Erfindungsgemäß werden wenigstens zwei Lastfälle betrachtet. Dazu wird jeweils in einem Zeitintervall eine vorbestimmte Druckdifferenz eingestellt und die zugehörige Leistungsaufnahme der Pumpe ermittelt. Da in den Zeitintervallen jeweils unterschiedliche Druckdifferenzen eingestellt werden, ergeben sich jeweils auch unterschiedliche Leistungsaufnahmen der Pumpe. Um auf die tatsächliche Last zum Antreiben der Pumpe und damit auf die tatsächlich erzeugten Bremsdrücke zurückzuschließen, wird aus den unterschiedlichen Leistungsaufnahmen ein Korrekturwert bzw. Kalibrierwert ermittelt. Dieser Korrekturwert wird in der elektronischen Steuereinheit des Bremssystems hinterlegt, und kann somit jederzeit bei elektrischen Ansteuerungen der Ventilanordnung zum Einstellen eines Sollwertes für die Druckdifferenz berücksichtigt werden.

Der große Vorteil des erfindungsgemäßen Verfahrens besteht darin, dass es nicht nur einmalig, beispielsweise beim sogenannten "Band-Ende-Test" zum Abschluss der Produktion, sondern im Prinzip jederzeit im Betrieb des Bremssystems durchgeführt werden kann. Es ist sogar ein Austausch der elektronischen Steuereinheit des Bremssystems möglich, da nach dem Austausch mittels des erfindungsgemäßen Verfahrens eine neue Kalibrierung des Bremssystems durch Ermitteln bzw. Aktualisieren des Korrekturwertes vorgenommen werden kann. Dies kann beispielsweise im Rahmen eines Werkstatt- bzw. Diagnose-Modus erfolgen.

Um jedoch dem Alterungsprozess der Systemkomponenten entgegenzuwirken, wird das erfindungsgemäße Verfahren in bevorzugter Weise in regelmäßigen Zeitabständen durchgeführt, die sich beispielsweise in Abhängigkeit der zurückgelegten Fahrstrecke des Fahrzeugs und/oder der Betriebsdauer des Fahrzeugs und/oder der Betriebsdauer des Bremssystems ergeben. Somit wird eine regelmäßige Aktualisierung des Korrekturwertes gewährleistet.

Aus Sicherheitsgründen ist vorgesehen, dass ein sofortiger Abbruch des erfindungsgemäßen Verfahrens erfolgt, wenn eine vom Fahrer des Fahrzeuges eingeleitete und/oder eine automatische Bremsung erfolgt, da Betriebsbremsungen Priorität haben. Aus diesem Grund kann auch vorgesehen sein, dass ein Abbruch des erfindungsgemäßen Verfahrens bereits dann erfolgt, wenn eine Bremsung bevorsteht, also beispielsweise wenn der Fahrer beginnt das Gaspedal zurückzunehmen.

In bevorzugter Weise werden zum Ermitteln des Korrekturwertes Verhältnisse aus den zuvor ermittelten Leistungsaufnahmen der Pumpe gebildet. Alternativ können zum Ermitteln des Korrekturwertes Differenzen aus den zuvor ermittelten Leistungsaufnahmen gebildet werden.

Das erfindungsgemäße Verfahren eignet sich nicht nur zum Kalibrieren des Bremssystems, sondern ermöglicht auch Rückschlüsse auf das Vorliegen eines Systemfehlers, unter anderem dann, wenn für den Korrekturwert ein Wert ermittelt wird, der nicht innerhalb eines vorbestimmten Bereichs liegt. Wird auf diese Weise ein Systemfehler erkannt, so kann ein Fehlercode in der elektronischen Steuereinheit hinterlegt und das Bremssystem in einen sicheren Zustand geschaltet werden.

Idealerweise wird bei einem der Lastfälle, die bei dem erfindungsgemäßen Verfahren betrachtet werden, die Druckdifferenz auf einen Wert in der Größenordnung Null eingestellt, so dass in dem zugehörigen Zeitintervall die Leistungsaufnahme der Pumpe für einen im Wesentlichen lastfreien Zustand ermittelt wird.

Des Weiteren ist vorgesehen, dass die Zeitintervalle, in denen die Leistungsaufnahme der Pumpe ermittelt wird, jeweils von gleicher Zeitdauer sind, um eine einheitliche Basis bei der Ermittlung bzw. Berechung des Korrekturwertes aus den ermittelten Leistungsaufnahmen der Pumpe zu bieten, so dass sich die eigentliche Ermittlung des Korrekturwertes bzw. der Leistungsaufnahme auf verhältnismäßig einfache Weise durchführen lässt. Alternativ können die Zeitintervalle von unterschiedlicher Zeitdauer sein; dies muss dann aber bei der Ermittlung des Korrekturwertes bzw. der Leistungsaufnahmen berücksichtigt werden.

Weiterhin ist vorgesehen, dass die Pumpe so angesteuert wird, dass in jedem der Zeitintervalle, in denen die Leistungsaufnahme der Pumpe ermittelt wird, ein gleich großer Förderstrom erzielt wird. Dies bedeutet, dass die dem die Pumpe antreibenden Elektromotor zugeführte elektrische Energie so verändert wird, dass aufgrund der Laständerung bewirkte Drehzahländerungen der Pumpe ausgeglichen bzw. ausgeregelt werden. Alternativ kann die Pumpe so angesteuert werden, dass in jedem der Zeitintervalle, in denen die Leistungsaufnahme der Pumpe ermittelt wird, unterschiedlich große Förderströme erzielt werden. In diesem Fall stellen sich in den Zeitintervallen jeweils unterschiedliche Drehzahlen der Pumpe ein, die bei der Ermittlung der Leistungsaufnahme der Pumpe berücksichtigt werden müssen. In dem Sonderfall, dass ein Ausgleichen bzw. Ausregeln der aufgrund der Laständerung bewirkten Drehzahländerungen der Pumpe nicht erfolgt, kann die Ermittlung der Leistungsaufnahmen der Pumpe bzw. die Ermittlung des Korrekturfaktors unmittelbar auf Grundlage der Drehzahländerung erfolgen.

Allerdings ist ein Ausgleichen bzw. Ausregeln der aufgrund der Laständerung bewirkten Drehzahländerungen der Pumpe zu bevorzugen, da nicht nur die gesamte elektrische Ansteuerung der Ventilanordnung, mittels der die Druckdifferenz eingestellt wird, sondern auch die gesamte elektrische Ansteuerung der Pumpe bzw. des die Pumpe antreibenden Elektromotors in die Kalibrierung einbezogen wird.

Es ist hervorzuheben, dass es für die Genauigkeit der Kalibrierung gemäß dem erfindungsgemäßen Verfahren von Bedeutung ist, dass die Leistungsaufnahmen der Pumpe ermittelt werden, wenn in dem jeweiligen Zeitintervall der Förderstrom der Pumpe konstant verläuft. Dies heißt, dass ein Zeitintervall, in dem die Leistungsaufnahme der Pumpe ermittelt wird, erst dann beginnt, wenn ein Ausgleichen bzw. Ausregeln der aufgrund einer Laständerung bewirkten Drehzahländerung der Pumpe erfolgt ist, und sich infolge ein konstant verlaufender Förderstrom eingestellt hat.

Im Folgenden wird die Erfindung anhand der Zeichnungen näher erläutert. Dazu zeigen:

Fig. 1     ein hydraulisches Schaltbild eines ersten Ausführungsbeispiels eines elektrisch steuerbaren Bremssystems, das gemäß dem erfindungsgemäßen Verfahren betrieben wird,

Fig. 2     ein Förderstrom-Zeit-Diagramm, anhand dem der Ablauf eines bevorzugten Ausführungsbeispiels des erfindungsgemäßen Verfahrens erläutert wird,

Fig. 3    ein Flussdiagramm, anhand dem der Ablauf eines bevorzugten Ausführungsbeispiels erläutert wird, und

Fig. 4    ein hydraulisches Schaltbild eines zweiten Ausführungsbeispiels eines elektrisch steuerbaren Bremssystems, das gemäß dem erfindungsgemäßen Verfahren betrieben wird,

wobei identische Teile jeweils mit gleichen Bezugszeichen versehen sind.

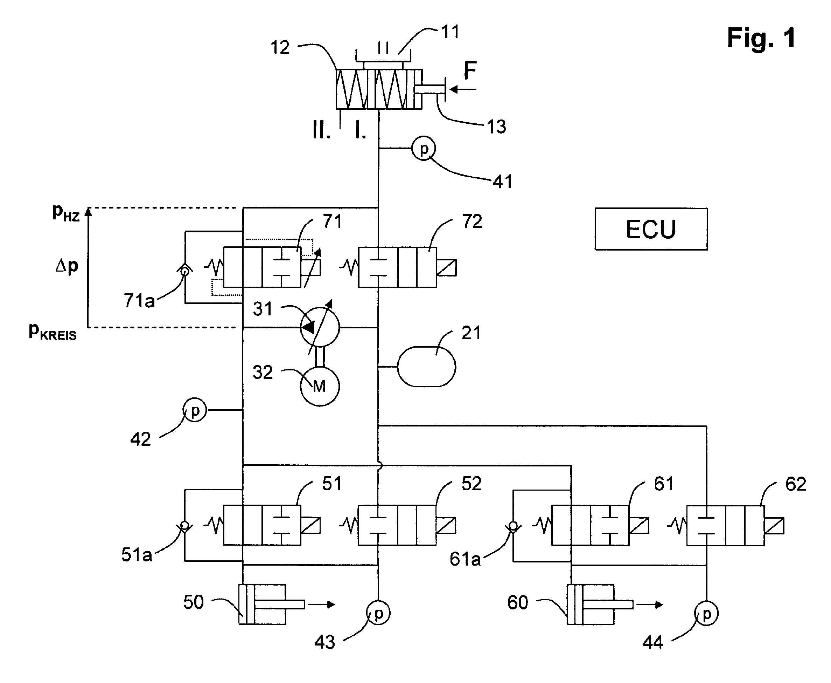

In Fig. 1 ist das hydraulische Schaltbild eines elektrisch steuer- bzw. regelbaren Bremssystems, das auch unter dem Begriff ESC-System - steht für "Electronic Stability Control" - bekannt ist, schematisch dargestellt.

Das Bremssystem arbeitet mittels einer Hydraulikflüssigkeit, die zum Teil in einem Behälter 11 bevorratet ist. Zum Erzeugen von Bremsdruck, der durch unter Druck setzen der Hydraulikflüssigkeit entsteht, dient ein Haupt(brems)zylinder 12, der vom Fahrer durch ein Pedal 13 zu betätigen ist, wobei die vom Fahrer eingeleitete Kraft F üblicherweise durch einen (nicht näher dargestellten) Bremskraftverstärker - pneumatisch, hydraulisch oder elektromechanisch - verstärkt wird.

Von dem Hauptzylinder 12 ausgehend werden ein erster und zweiter Bremskreis I., II. versorgt, wobei jeder Bremskreis zwei Radbremsen versorgt. Da die Bremskreise I., II. im Wesentlichen identisch aufgebaut sind, ist hier nur der erste Bremskreis I. im Detail dargestellt, der in den beiden Rad(brems)zylindern 50 und 60 Bremsdruck erzeugt, um die zugehörigen (nicht näher dargestellten) Radbremsen zu betätigen. Je nach dem, welche Radbremse des Fahrzeugs über welchen Bremskreis betätigt wird, ergibt sich eine Vorder-/Hinterachs-Aufteilung, was heißt der eine Bremskreis betätigt die Radbremsen der Vorderachse und der andere die der Hinterachse, oder eine diagonale Aufteilung, was heißt jeder Bremskreis betätigt die Radbremse eines Vorderrades und die des diagonal gegenüberliegenden Hinterrades.

Die hydraulische Verbindung von dem Hauptzylinder 12 zu den Radzylindern 50 und 60 wird von durch Elektromagnete betätigten 2/2-Wegeventilen 51, 52, 61, 62, 71 und 72 bestimmt, die im unbetätigtem, also elektrisch nicht angesteuertem Zustand die dargestellten Grundstellungen einnehmen. Grundstellung heißt hier im Einzelnen, dass die Ventile 51, 61 und 71 jeweils ihre Durchflussstellung, die Ventile 52, 62 und 72 jeweils ihre Sperrstellung einnehmen.

Zum Ausführen von - in der Regel vom Fahrer über das Pedal 13 eingeleiteten - Normalbremsungen besteht bei der dargestellten Grundstellung der Ventile 51, 52, 61, 62, 71 und 72 eine unmittelbare hydraulische Verbindung unter dem Hauptzylinder 12 und den Radzylindern 50 und 60. Dadurch wirkt bei betätigtem Hauptzylinder 12 in den Radzylindern 50 und 60 ein Bremsdruck, dessen Betrag von der vom Fahrer am Pedal 13 eingeleiteten Kraft F abhängt.

Bei einer Antiblockierregelung (ABS) gilt es während einer Bremsung ein Blockieren der Räder zu verhindern. Dazu ist es erforderlich den in den Radzylindern 50 bzw. 60 wirkenden Bremsdruck individuell zu modulieren. Dies geschieht durch Einstellen in zeitlicher Folge wechselnder Druckaufbau-, Druckhalte- und Druckabbauphasen, die sich durch geeignete Ansteuerung der den Radzylindern 50 bzw. 60 zugeordneten Ventile 51, 52 bzw. 61, 62 ergeben.

Während einer Druckaufbauphase nehmen die Ventile 51, 52 bzw. 61, 62 jeweils ihre Grundstellung ein, so dass ein Erhöhen des Bremsdruckes in den Radzylindern 50 bzw. 60 wie bei einer Normalbremsung erfolgt.

Für eine Druckhaltephase wird nur das Ventil 51 bzw. 61 angesteuert, also in seine Sperrstellung überführt. Da ein Ansteuern des Ventils 52 bzw. 62 dabei nicht erfolgt, verbleibt es in seiner Sperrstellung. Dadurch ist der Radzylinder 50 bzw. 60 hydraulisch abgekoppelt, so dass ein in dem Radzylinder 50 bzw. 60 anstehender Bremsdruck konstant gehalten wird.

Bei einer Druckabbauphase wird sowohl das Ventil 51 bzw. 61, als auch das Ventil 52 bzw. 62 angesteuert, also das Ventil 51 bzw. 61 in seine Sperrstellung und das Ventil 52 bzw. 62 in seine Durchflussstellung überführt. Somit kann Hydraulikflüssigkeit aus dem Radzylinder 50 bzw. 60 abfließen, um einen in dem Radzylinder 50 bzw. 60 anstehenden Bremsdruck zu verringern.

Den Ventilen 51 und 61 sind jeweils Rückschlagventile 51a und 61a parallel geschaltet, über die ein sofortigen Abbau eines in den Radzylindern 50 und 60 anstehenden Bremsdruckes erfolgt, wenn die Ventile 51 und 61 für eine Druckhalte- oder Druckabbauphase während ABS noch angesteuert sind, sich also in ihrer Sperrstellung befinden, aber der Fahrer die Betätigung des Pedals 13 bereits zurückgenommen hat.

Die während einer Druckabbauphase aus dem Radzylinder 50 bzw. 60 abfließende Hydraulikflüssigkeit wird mittels einer von einem Elektromotor 32 angetriebenen Pumpe 31 in den Bremskreis I. zurückgefördert, wobei ein Niederdruckspeicher 21 zum Zwischenspeichern von Hydraulikflüssigkeit dient. Vorzugsweise wird die Pumpe 31 als Radial- bzw. Mehrkolbenpumpe ausgeführt. Die elektrische Ansteuerung bzw. Stromzufuhr des Elektromotors 32 erfolgt üblicherweise durch Pulsweitenmodulation (PWM), über die die Drehzahl des Elektromotors 32 steuer- bzw. regelbar ist, so dass die Fördermenge bzw. der Förderstrom der Pumpe 31 verstellt werden kann. Auch ist es üblich, dass der Elektromotor 32 gleichzeitig die Pumpe des (nicht im Detail dargestellten) zweiten Bremskreises II. antreibt.

Automatische Bremsungen erfolgen in der Regel unabhängig von einer vom Fahrer am Pedal 13 eingeleiteten Kraft F. Solche sind beispielsweise eine Antriebsschlupfregelung (ASR), die ein Durchdrehen einzelner Räder bei einem Anfahrvorgang durch gezieltes Abbremsen verhindert, oder eine Fahrdynamikregelung (ESP), die das Fahrzeugverhalten im Grenzbereich durch gezieltes Abbremsen einzelner Räder an den Fahrerwunsch und die Fahrbahnverhältnisse anpasst, oder eine adaptive Geschwindigkeitsregelung (ACC), die durch unter anderem selbsttätiges Bremsen einen Abstand des eigenen Fahrzeugs zu einem vorausfahrenden Fahrzeug einhält, oder eine Bergabfahrhilfe (HDC), die die Geschwindigkeit und Spurtreue eines Fahrzeugs beim Bergabfahren auf losem Grund bzw. einer Fahrbahn mit niedrigem Reibwert, wie Schnee, unter anderem mittels Bremseingriffen kontrolliert und konstant hält.

Zum Ausführen von automatischen Bremsungen werden die Ventile 71 und 72 angesteuert, so dass das Ventil 71 seine Sperrstellung und das Ventil 72 seine Durchflussstellung einnimmt. Dadurch ist zum einen der Ausgang der Pumpe 31 von dem Bremskreis I. bzw. dem Hauptzylinder 12 hydraulisch abgekoppelt, was heißt eine unmittelbare hydraulische Verbindung besteht nur unter dem Ausgang der Pumpe 31 und den Radbremsen 50 und 60. Zum anderen besteht eine hydraulische Verbindung des Eingangs der Pumpe 31 zu dem Hauptzylinder 12 bzw. dem Behälter 11, wodurch die Pumpe 31 Hydraulikflüssigkeit aus dem Behälter 11 ansaugen kann, um Bremsdruck in den Radbremsen 50 und 60 zu erzeugen. Ein Feineinstellen bzw. Modulieren des Bremsdrucks kann durch entsprechende Ansteuerung der den Radbremsen 50 bzw. 60 zugeordneten Ventile 51, 52 bzw. 61, 62 vorgenommen werden, wie im Zusammenhang mit ABS erläutert.

Dem Ventil 71 ist ein Rückschlagventil 71a parallel geschaltet, über das der Fahrer bei Betätigung des Pedals 13, beispielsweise während ESP, einen Bremsdruck auch dann aufbauen bzw. erhöhen kann, wenn sich das Ventil 71 in seiner Sperrstellung befindet.

Eine elektronische Steuereinheit ECU, nimmt, wie allgemein bekannt, die elektrische Ansteuerung der Ventile 51, 52, 61, 62, 71 und 72, sowie des Elektromotors 32 vor. Dies geschieht in Abhängigkeit von einerseits das Fahrzeugverhalten beschreibenden Messgrößen (z.B. Raddrehzahlen, Fahrgeschwindigkeit, Giergeschwindigkeit, Querbeschleunigung, Längsbeschleunigung) und andererseits den Fahrerwunsch beschreibenden Messgrößen (z.B. Betätigung des Pedals 13, Lenkradwinkel).

Als den Fahrerwunsch beschreibende Messgröße kann optional auch der im Hauptbremszylinder 12 erzeugte Bremsdruck $p_{HZ}$ herangezogen werden, der mittels eines Sensors 41 erfasst werden kann.

Das Ventil 71 ist als eine Ventilanordnung 71 ausgebildet, mittels der durch geeignete elektrische Ansteuerung eine Druckdifferenz $\Delta p$ einstellbar. Die Funktionsweise einer solchen Ventilanordnung ist in der DE 10 2005 026 740 A1 beschrieben. Die elektrische Ansteuerung bzw. Stromzufuhr der Ventilanordnung 71 erfolgt in bekannter Weise durch Pulsweitenmodulation (PWM), deren Puls/Pause-Verhältnis einstellbar ist, so dass in dessen Abhängigkeit die Druckdifferenz $\Delta p$ als Funktion

$$\Delta p = f(\, PWM \,)$$

steuer- bzw. regelbar ist, wobei die Druckdifferenz $\Delta p$ der Differenz des am Ausgang der Pumpe 31 erzeugten Bremsdruckes $p_{KREIS}$ und des am Ausgang des Hauptzylinders 12 erzeugten Druckes $p_{HZ}$ entspricht.

$$\Delta p = p_{KREIS} - p_{HZ}$$

Somit kann der Bremsdruck $p_{KREIS}$ im Sinne einer Abströmregelung unmittelbar über die Druckdifferenz $\Delta p$ kontinuierlich gesteuert bzw. geregelt werden, wobei ein Sollwert S für die Druckdifferenz $\Delta p$ mittels der PWM der Stromzufuhr der Ventilanordnung 71 einstellbar ist.

In den Fällen, dass automatische Bremsvorgänge unabhängig von einer vom Fahrer am Pedal 13 eingeleiteten Kraft F erfolgen, ist $p_{HZ}$ = 0 bar, so dass der Bremsdruck $p_{KREIS}$ unmittelbar der Druckdifferenz $\Delta p$ entspricht.

Optional kann vorgesehen sein, den Bremsdruck $p_{KREIS}$ am Ausgang der Pumpe 31 mittels eines Sensors 42 zu erfassen.

Um die Genauigkeit der Druckdifferenzsteuerung bzw. -regelung mittels der Ventilanordnung 71 noch weiter zu erhöhen, kann zur Feinregelung unterstützend die Fördermenge bzw. der Förderstrom der Pumpe 31 verstellt werden, in dem die Drehzahl des die Pumpe 31 antreibenden Elektromotors 32 entsprechend gesteuert bzw. geregelt wird.

Zum Kalibrieren des Bremssystems bzw. der Ventilanordnung 71 wird zunächst das Ventil 72 so angesteuert, dass es seine Durchflussstellung einnimmt und die Pumpe 31 Hydraulikflüssigkeit aus dem Behälter 11 ansaugen kann. Des Weiteren wird die Ventilanordnung 71 so angesteuert, dass sich eine Druckdifferenz Afp zwischen dem Ausgang der Pumpe 31 und dem Hauptzylinder 12 einstellt. Somit fördert die Pumpe 31 über die Ventilanordnung 71 und das Ventil 72 im Kreis, wobei die der Pumpe 31 entgegenstehende Last durch die an der Ventilanordnung 71 eingestellte Druckdifferenz $\Delta p$ bestimmt wird. Folglich besteht, sofern eine bestimmte Pumpen-Drehzahl bzw. ein bestimmter Pumpen-Förderstrom zugrunde gelegt wird, ein unmittelbarer Zusammenhang zwischen der Druckdifferenz Δp und der Leistungsaufnahme P der Pumpe 31.

$$P = f( \Delta p )$$

Die Leistungsaufnahme P der Pumpe 31 wird aus dem zeitlichen Verlauf der elektrischen Ansteuerung bzw. Stromzufuhr des die Pumpe 31 antreibenden Elektromotors 32 innerhalb eines Zeitintervalls Δt ermittelt.

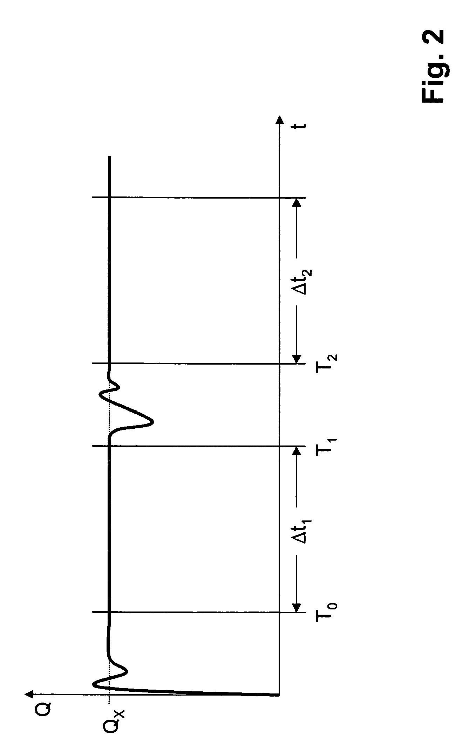

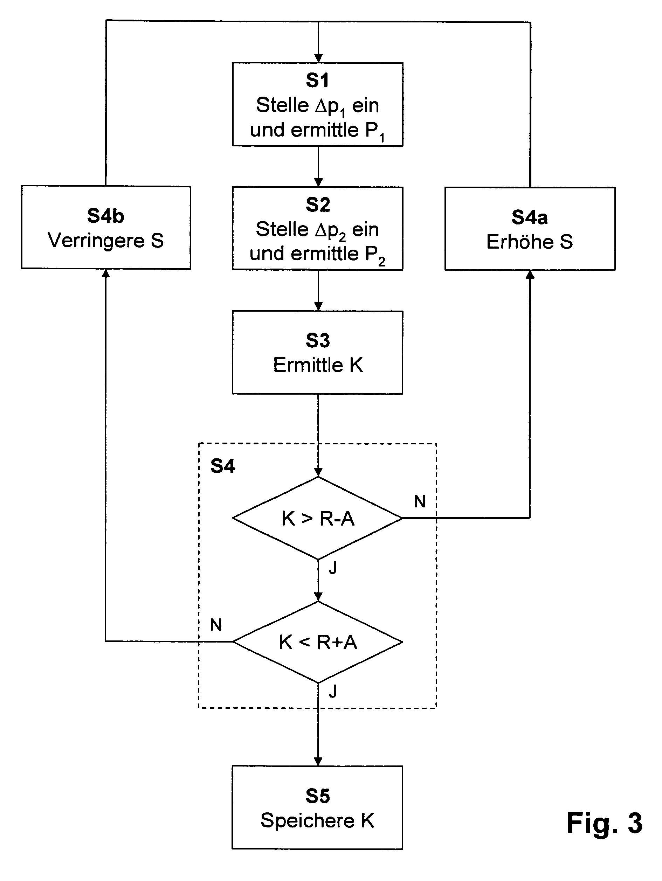

Der Ablauf des Kalibrierens ist als Flussdiagramm in Fig. 3 dargestellt. In einem ersten Schritt S1 wird die Ventilanordnung 71 so angesteuert, dass sich eine erste Druckdifferenz $\Delta p_1$ einstellt. In bevorzugter Weise wird die Ventilanordnung 71 dazu so angesteuert, dass sie ihre Durchflussstellung einnimmt, wodurch die erste Druckdifferenz $\Delta p_1$ auf einen Wert in der Größenordnung Null vorbestimmt wird ($\Delta p_1 \sim 0$ bar). Wie das Förderstrom-Zeit-Diagramm in Fig. 2 zeigt, wird die Pumpe 31 nun so gesteuert bzw. geregelt, dass sich ein bestimmter Förderstrom $Q_X$ einstellt. Sobald zum Zeitpunkt $T_0$ der Förderstrom Q der Pumpe 31 konstant verläuft, beginnt ein erstes Zeitintervall $\Delta t_1$, in dem eine der ersten Druckdifferenz $\Delta p_1$ entsprechende erste Leistungsaufnahme $P_1$ der Pumpe 31 ermittelt wird.

Nach Ablauf des ersten Zeitintervalls $\Delta t_1$, also zum Zeitpunkt $T_1$, wird in einem zweiten Schritt S2 die Ventilanordnung 71 so angesteuert, dass sich eine zweite Druckdifferenz $\Delta p_2$ einstellt, die größer als die erste Druckdifferenz $\Delta p_1$ ist (z.B. $\Delta p_2 \sim 3$ bar). Die Erhöhung der Druckdifferenz hat, wie in Fig. 2 dargestellt, zunächst einen Einbruch des Förderstroms zur Folge, doch sobald sich durch Erhöhung der Stromzufuhr des die Pumpe 31 antreibenden Elektromotors 32 wieder der bestimmte Förderstrom $Q_X$ eingestellt hat und zum Zeitpunkt $T_2$ konstant verläuft, beginnt ein zweites Zeitintervall $\Delta t_2$, in dem eine der zweiten Druckdifferenz $\Delta p_2$ entsprechende zweite Leistungsaufnahme $P_2$ der Pumpe 31 ermittelt wird.

In bevorzugter Weise wird nicht nur die Pumpe 31 so angesteuert, dass in dem ersten Zeitintervall $\Delta t_1$ und in dem zweiten Zeitintervall $\Delta t_2$ ein gleich großer Förderstrom erzielt wird, sondern es wird auch für das erste Zeitintervall $\Delta t_1$ und das zweite Zeitintervall $\Delta t_2$ die gleiche Zeitdauer gewählt (z.B. $\Delta t_1 = \Delta t_2 \sim 1$ s).

Daraufhin wird in einem dritten Schritt S3 aus der ersten Leistungsaufnahme $P_1$ und der zweiten Leistungsaufnahme $P_2$ ein Korrekturwert K ermittelt, wozu beispielsweise ein Verhältnis aus der ersten Leistungsaufnahme $P_1$ und der zweiten Leistungsaufnahme $P_2$ gebildet wird.

$$K = P_2 / P_1$$

Da im zweiten Zeitintervall $\Delta t_2$ eine größere Druckdifferenz als im ersten Zeitintervall $\Delta t_1$ eingestellt wurde ($\Delta p_2 > \Delta p_1$), ist auch die Leistungsaufnahme im zweiten Zeitintervall $\Delta t_2$ größer als die Leistungsaufnahme im ersten Zeitintervall $\Delta t_1$ ($P_2 > P_1$). Von daher muss der Korrekturwert K einen Wert größer als Eins aufweisen (K > 1).

Wird nun für den Korrekturwert K ein Wert ermittelt, der nicht innerhalb eines vorbestimmten Bereichs liegt, für den in diesem Fall K > 1 gilt, kann auf das Vorliegen eines Systemfehlers geschlossen werden.

In einem vierten Schritt S4 wird der Korrekturwert K mit einem Referenzwert R verglichen und der Sollwert S für die Druckdifferenz Δp so eingestellt, dass sich der Korrekturwert K an den Referenzwert R annähert. Wird beispielsweise ein Korrekturwert von K = 1,2 ermittelt und ist ein Referenzwert von R = 1,5 vorbestimmt, so wird, vorausgesetzt es gilt $K = P_2 / P_1$, in einem Zwischenschritt S4a der Sollwert S für die Druckdifferenz Δp erhöht. Folglich wird sich bei Wiederholung der Schritte S1 bis S3 zumindest im zweiten Zeitintervall $\Delta t_2$ eine größere Leistungsaufnahme $P_2$ als bei der vorhergehenden Ausführung der Schritte S1 bis S3 einstellen, was zu einer Erhöhung des Korrekturwerts K und somit zu einer Annäherung an den Referenzwert R führt.

Analog wird in einem Zwischenschritt S4b der Sollwert S für die Druckdifferenz Δp verringert, wenn ein Korrekturwert ermittelt wird, der größer als der Referenzwert ist.

Der Vergleich des Korrekturwertes K mit dem Referenzwert R und die Einstellung des Sollwertes S für die Druckdifferenz Δp werden so oft wiederholt, bis sich der Korrekturwert K innerhalb einer vorbestimmten Abweichung A an den Referenzwert R angenähert hat. Es wird also der Korrekturwert K iterativ an den Referenzwert R angenähert. Ist beispielsweise eine Abweichung von A = ± 0,1 vorbestimmt, so ergibt sich bei einem Referenzwert von R = 1,5 ein Bereich von 1,4 < R < 1,6. Sobald für den Korrekturwert K einen Wert ermittelt wird, der innerhalb dieses Bereiches (R-A < K < R+A) liegt, wird dieser Wert in einem fünften Schritt S5 als Korrekturwert K in der elektronischen Steuereinheit ECU hinterlegt bzw. abgespeichert. Damit ist das Kalibrieren der Ventilanordnung 71 abgeschlossen.

Erfolgt ein Abbruch der Kalibrierung während der Schritte S1 bis S4, beispielsweise weil der Fahrer des Fahrzeugs eine Bremsung einleitet, so wird der zuletzt ermittelte Korrekturwert K in der elektronischen Steuereinheit ECU hinterlegt bzw. abgespeichert, und steht dann als Initialwert für die nächste Kalibrierung zur Verfügung.

Der so ermittelte bzw. aktualisierte Korrekturwert K wird dann für zukünftige elektrische Ansteuerungen der Ventilanordnung 71 zum Einstellen eines Sollwertes S für die Druckdifferenz Δp berücksichtigt, beispielsweise indem mittels des Korrekturwerts K als Offset oder Faktor die PWM der Stromzufuhr der Ventilanordnung 71 adaptiert wird.

$$\Delta p = f(\text{ PWM} \pm K) \quad \text{oder} \quad \Delta p = f(\text{ PWM} \cdot K)$$

Auch ist vorgesehen, dass auf das Vorliegen eines Systemfehlers geschlossen wird, wenn die Annäherung des Korrekturwertes K an den Referenzwert R nicht innerhalb einer vorbestimmten Zeitdauer und/oder nach einer vorbestimmten Anzahl von Wiederholungen erfolgt ist.

Der Referenzwert R ist aus Laboruntersuchungen bekannt und wird gleichfalls in der elektronischen Steuereinheit ECU abgespeichert. Da der Referenzwert für verschiedene Druckdifferenzen Δp unterschiedlich ist, kann der Referenzwert R in Abhängigkeit der ersten und/oder zweiten Druckdifferenz $\Delta p_1$, $\Delta p_2$ vorbestimmt sein und beispielsweise als Kennfeld in der elektronischen Steuereinheit ECU hinterlegt bzw. abgespeichert sein. Dies ist vor allem dann erforderlich, wenn das Kalibrieren der Ventilanordnung 71 für verschiedene Arbeitspunkte, sprich für verschiedene Druckdifferenzen Δp, durchzuführen ist.

Damit bei Durchführung des erfindungsgemäßen Verfahrens eine Erzeugung bzw. Veränderung des Bremsdruckes in den Radzylindern 50 und 60 verhindert wird, beispielsweise dann, wenn sich das Fahrzeug in Fahrt befindet, kann vorgesehen sein, dass wenigstens eines der den Radzylindern 50 bzw. 60 zugeordneten Ventile 51 bzw. 61 so angesteuert wird, dass es seine Sperrstellung einnimmt.

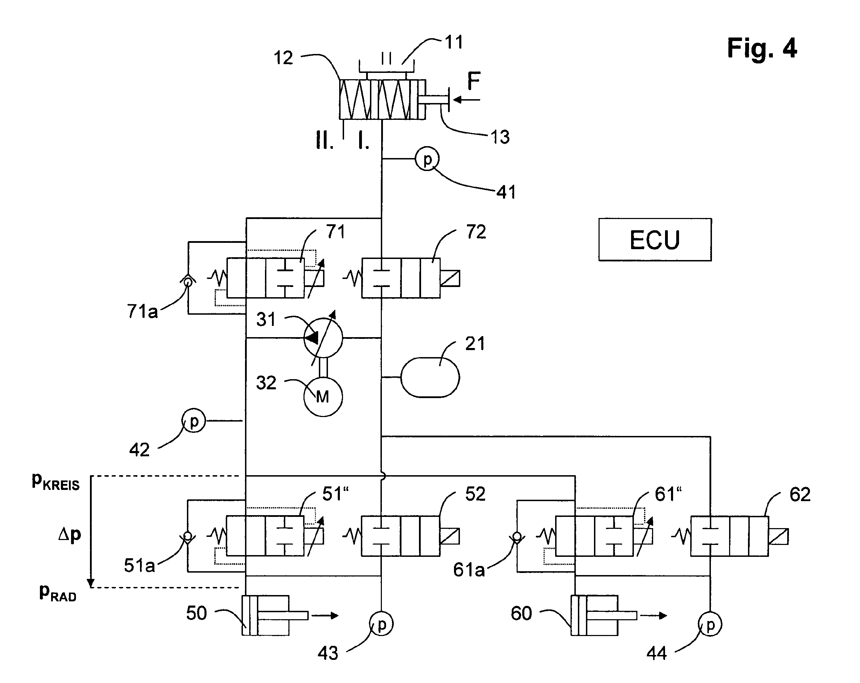

In Fig. 4 ist das hydraulische Schaltbild eines elektrisch steuer- bzw. regelbaren Bremssystems dargestellt, bei dem gegenüber Fig. 1 ebenfalls die Ventile 51 und 61 jeweils als eine Ventilanordnung 51" und 61" ausgebildet sind, mittels der durch geeignete elektrische Ansteuerung eine Druckdifferenz Δp einstellbar ist, wie aus der DE 102 47 651 A1 bekannt. Dabei entspricht die Druckdifferenz Δp der Differenz des am Ausgang der Pumpe 31 erzeugten Bremsdruckes $p_{KREIS}$ und dem in dem Radzylinder 50 bzw. 60 erzeugten Bremsdruckes $p_{RAD}$.

$$\Delta p = p_{KREIS} - p_{RAD}$$

Optional kann vorgesehen sein, den in den Radzylindern 50 bzw. 60 erzeugten Bremsdruck $p_{RAD}$ mittels Sensoren 43 bzw. 44 zu erfassen.

Zum Kalibrieren des Bremssystems bzw. der Ventilanordnungen 51" und 61" wird die Ventilanordnung 71 zunächst so angesteuert, dass sie ihre Sperrstellung einnimmt.

Um die Ventilanordnung 51" zu kalibrieren, wird einerseits die dem Radzylinder 60 zugeordnete Ventilanordnung 61" so angesteuert, dass sie ihre Sperrstellung einnimmt, und andererseits das Ventil 52 so angesteuert, dass es seine Durchlassstellung einnimmt. Somit kann die Pumpe 31 über die Ventilanordnung 51" und das Ventil 52 im Kreis fördern, wobei die der Pumpe 31 entgegenstehende Last durch die an der Ventilanordnung 51" eingestellte Druckdifferenz Δp bestimmt wird.

Um die Ventilanordnung 61" zu kalibrieren, wird einerseits die dem Radzylinder 50 zugeordnete Ventilanordnung 51" so angesteuert, dass sie ihre Sperrstellung einnimmt, und andererseits das Ventil 62 so angesteuert, dass es seine Durchlassstellung einnimmt. Somit kann die Pumpe 31 über die Ventilanordnung 61" und das Ventil 62 im Kreis fördern, wobei die der Pumpe 31 entgegenstehende Last durch die an der Ventilanordnung 61" eingestellte Druckdifferenz Δp bestimmt wird.

Die eigentliche Kalibrierung der Ventilanordnungen 51" und 61" kann dann analog, wie im Zusammenhang mit der Kalibrierung der Ventilanordnung 71 erläutert, ablaufen.

Da bei einer Kalibrierung der Ventilanordnungen 51" und 61" eine Erzeugung bzw. Veränderung eines Bremsdruckes $p_{RAD}$ in den Radzylindern 50 und 60 nicht verhindert werden kann, wird diese in bevorzugter Weise nur dann durchgeführt, wenn sich das Fahrzeug nicht in Fahrt befindet oder wenn zum Kalibrieren nur verhältnismäßig kleine Druckdifferenzen (z.B. Δp < 3 bar) eingestellt werden, die sich kaum störend auswirken.

Abschließend sei noch erwähnt, dass anhand von Fig. 1 bis 4 beispielhaft bevorzugte Ausführungsbeispiele der Erfindung erläutert wurden, weshalb es im Ermessen eines Fachmanns liegt, im Umfang der Ansprüche und der Beschreibung Abänderungen und Kombinationen vorzunehmen. Dies gilt insbesondere im Hinblick auf die optionale Verwendung von Sensoren 41, 42, 43 und 44 zur Erfassung der Bremsdrücke $p_{HZ}$, $p_{KREIS}$ und $p_{RAD}$, wodurch das - für das erfindungsgemäße Verfahren relevante - Einstellen vorbestimmter Druckdifferenzen Δp sehr präzise erfolgen kann, so dass sich eine besonders genaue Kalibrierung ergibt.

**Patentansprüche**

1. Verfahren zum Betreiben eines elektrisch steuerbaren Bremssystems für ein Kraftfahrzeug mit einem Hauptzylinder (12) zum Erzeugen eines ersten Bremsdruckes ($p_{HZ}$), einer elektrisch angesteuerten Pumpe (31) zum Erzeugen eines zweiten Bremsdruckes ($p_{KREIS}$), und wenigstens einer elektrisch angesteuerten Ventilanordnung (71) zum Einstellen einer Druckdifferenz ($\Delta p$) zwischen dem zweiten Bremsdruck ($p_{KREIS}$) und dem ersten Bremsdruck ($p_{HZ}$), **gekennzeichnet dadurch, dass**

   - in einem ersten Zeitintervall ($\Delta t_1$) eine vorbestimmte erste Druckdifferenz ($\Delta p_1$) eingestellt und eine zugehörige erste Leistungsaufnahme ($P_1$) der Pumpe (31) ermittelt wird,
   - in einem zweiten Zeitintervall ($\Delta t_2$) eine vorbestimmte zweite Druckdifferenz ($\Delta p_2$) eingestellt und eine zugehörige zweite Leistungsaufnahme ($P_2$) der Pumpe (31) ermittelt wird,
   - aus der ersten Leistungsaufnahme ($P_1$) und der zweiten Leistungsaufnahme ($P_2$) ein Korrekturwert (K) ermittelt wird,
   - der Korrekturwert (K) zum Einstellen eines Sollwertes (S) für die Druckdifferenz ($\Delta p$) berücksichtigt wird.

2. Verfahren zum Betreiben eines elektrisch steuerbaren Bremssystems für ein Kraftfahrzeug mit Radzylindern (50, 60), in denen ein erster Bremsdruck ($p_{RAD}$) erzeugt wird, einer elektrisch angesteuerten Pumpe (31) zum Erzeugen eines zweiten Bremsdruckes ($p_{KREIS}$), und wenigstens einer elektrisch angesteuerten Ventilanordnung (51", 61") zum Einstellen einer Druckdifferenz ($\Delta p$) zwischen dem zweiten Bremsdruck ($p_{KREIS}$) und dem ersten Bremsdruck ($p_{RAD}$), **gekennzeichnet dadurch, dass**

   - in einem ersten Zeitintervall ($\Delta t_1$) eine vorbestimmte erste Druckdifferenz ($\Delta p_1$) eingestellt und eine zugehörige erste Leistungsaufnahme ($P_1$) der Pumpe (31) ermittelt wird,
   - in einem zweiten Zeitintervall ($\Delta t_2$) eine vorbestimmte zweite Druckdifferenz ($\Delta p_2$) eingestellt und eine zugehörige zweite Leistungsaufnahme ($P_2$) der Pumpe (31) ermittelt wird,
   - aus der ersten Leistungsaufnahme ($P_1$) und der zweiten Leistungsaufnahme ($P_2$) ein Korrekturwert (K) ermittelt wird,
   - der Korrekturwert (K) zum Einstellen eines Sollwertes (S) für die Druckdifferenz ($\Delta p$) berücksichtigt wird.

3. Verfahren nach Anspruch 1 oder 2, bei dem ein Abbruch des Verfahrens erfolgt, wenn eine vom Fahrer des Fahrzeuges eingeleitete und/oder eine automatische Bremsung erfolgt.

4. Verfahren nach einem der Ansprüche 1 bis 3, bei dem ein Abbruch des Verfahrens erfolgt, wenn eine Bremsung bevorsteht.

5. Verfahren einem der Ansprüche 1 bis 4, bei dem zum Ermitteln des Korrekturwertes (K) ein Verhältnis aus der ersten Leistungsaufnahme ($P_1$) und der zweiten Leistungsaufnahme ($P_2$) gebildet wird und/oder bei dem zum Ermitteln des Korrekturwertes (K) eine Differenz aus der ersten Leistungsaufnahme ($P_1$) und der zweiten Leistungsaufnahme ($P_2$) gebildet wird.

6. Verfahren nach Anspruch 5, bei dem auf das Vorliegen eines Systemfehlers geschlossen wird, wenn für den Korrekturwert (K) ein Wert ermittelt wird, der nicht innerhalb eines vorbestimmten Bereichs liegt.

7. Verfahren nach einem der Ansprüche 1 bis 6, bei dem die erste Druckdifferenz ($\Delta p_1$) oder die zweite Druckdifferenz ($\Delta p_2$) auf einen Wert in der Größenordnung Null eingestellt wird.

8. Verfahren nach einem der Ansprüche 1 bis 7, bei dem das erste Zeitintervall ($\Delta t_1$) und das zweite Zeitintervall ($\Delta t_2$) von gleicher oder von unterschiedlicher Zeitdauer sind.

9. Verfahren nach einem der Ansprüche 1 bis 8, bei dem die Pumpe (31) so angesteuert wird, dass in dem ersten Zeitintervall ($\Delta t_1$) und in dem zweiten Zeitintervall ($\Delta t_2$) ein gleich großer Förderstrom oder unterschiedlich große För-Förderströme erzielt wird/werden.

10. Verfahren nach einem der Ansprüche 1 bis 9, bei dem die erste bzw. zweite Leistungsaufnahme ($P_1$, $P_2$) ermittelt

wird, wenn in dem ersten bzw. zweiten Zeitintervall ($\Delta t_1$, $\Delta t_2$) der Förderstrom der Pumpe (31) konstant verläuft.

11. Verfahren nach einem der Ansprüche 1 bis 10, bei dem der Korrekturwert (K) mit einem Referenzwert (R) verglichen wird und der Sollwert (S) für die Druckdifferenz ($\Delta p$) so eingestellt wird, dass sich der Korrekturwert (K) an den Referenzwert (R) annähert.

12. Verfahren nach Anspruch 11, bei dem der Vergleich des Korrekturwertes (K) mit dem Referenzwert (R) und die Einstellung des Sollwertes (S) für die Druckdifferenz ($\Delta p$) so oft wiederholt werden, bis sich der Korrekturwert (K) innerhalb einer vorbestimmten Abweichung (A) an den Referenzwert (R) angenähert hat.

13. Verfahren nach Anspruch 11 oder 12, bei dem auf das Vorliegen eines Systemfehlers geschlossen wird, wenn die Annäherung des Korrekturwertes (K) an den Referenzwert (R) nicht innerhalb einer vorbestimmten Zeitdauer und/oder nach einer vorbestimmten Anzahl von Wiederholungen erfolgt ist.

14. Verfahren nach einem der Ansprüche 11 bis 13, bei dem der Referenzwert (R) in Abhängigkeit der ersten und/oder zweiten Druckdifferenz ($\Delta p_1$, $\Delta p_2$) vorbestimmt ist.

15. Elektrisch steuerbares Bremssystem für ein Kraftfahrzeug, mit

- einem Hautbremszylinder (12);
- einem Radzylinder (50, 60);
- einer elektrisch angesteuerten Pumpe (31), die dazu eingerichtet ist, einen zweiten Bremsdruck ($p_{KREIS}$) zu erzeugen;
- wenigstens einer ersten elektrisch angesteuerten Ventilanordnung (71) und wenigstens einer zweiten elektrisch angesteuerten Ventilanordnung (51", 61"), wobei die wenigstens eine erste Ventilanordnung dazu eingerichtet ist, eine Druckdifferenz ($\Delta p$) zwischen dem zweiten Bremsdruck und einem im Hauptbremszylinder anliegenden Bremsdruck einzustellen und/oder die zweite Ventilanordnung (51", 61") dazu eingerichtet ist, eine Druckdifferenz ($\Delta p$) zwischen dem zweiten Bremsdruck und einem in dem Radzylinder anliegenden Bremsdruck einzustellen; und
- einer elektronischen Steuereinheit (ECU), wobei die elektronische Steuereinheit dazu eingerichtet ist,
- in einem ersten Zeitintervall ($\Delta t_1$) eine vorbestimmte erste Druckdifferenz ($\Delta p_1$) einzustellen und eine zugehörige erste Leistungsaufnahme ($P_1$) der Pumpe (31) zu ermitteln,
- in einem zweiten Zeitintervall ($\Delta t_2$) eine vorbestimmte zweite Druckdifferenz ($\Delta p_2$) einzustellen und eine zugehörige zweite Leistungsaufnahme ($P_2$) der Pumpe (31) zu ermitteln,
- aus der ersten Leistungsaufnahme ($P_1$) und der zweiten Leistungsaufnahme ($P_2$) ein Korrekturwert (K) zu ermitteln, und
- den Korrekturwert (K) zum Einstellen eines Sollwertes (S) für die Druckdifferenz ($\Delta p$) zu berücksichtigen.

## Claims

1. A method for operating an electrically controllable brake system for a motor vehicle with a master cylinder (12) for generating a first brake pressure ($p_{HZ}$), with an electrically driven pump (31) for generating a second brake pressure ($p_{KREIS}$), and with at least one electrically driven valve arrangement (71) for setting a pressure difference ($\Delta p$) between the second brake pressure ($p_{KREIS}$) and the first brake pressure ($p_{HZ}$), **characterized in that**

- in a first time interval ($\Delta t_1$) a predetermined first pressure difference ($\Delta p_1$) is set and an associated first power consumption ($P_1$) of the pump (31) is ascertained,
- in a second time interval ($\Delta t_2$) a predetermined second pressure difference ($\Delta p_2$) is set and an associated second power consumption ($P_2$) of the pump (31) is ascertained,
- a correction value (K) is ascertained from the first power consumption ($P_1$) and the second power consumption ($P_2$), and
- the correction value (K) is taken into consideration for the purpose of setting a set-point value (S) for the pressure difference ($\Delta p$).

2. The method for operating an electrically controllable brake system for a motor vehicle with wheel cylinders (50, 60) in which a first brake pressure ($p_{RAD}$) is generated, with an electrically driven pump (31) for generating a second brake pressure ($p_{KREIS}$) and with a least one electrically driven valve arrangement (51", 61") for setting a pressure

difference ($\Delta p$) between the second brake pressure ($p_{KREIS}$) and the first brake pressure ($p_{RAD}$), **characterized in that**

- in a first time interval ($\Delta t_1$) a predetermined first pressure difference ($\Delta p_1$) is set and an associated first power consumption ($P_1$) of the pump (31) is ascertained,
- in a second time interval ($\Delta t_2$) a predetermined second pressure difference ($\Delta p_2$) is set and an associated second power consumption ($P_2$) of the pump (31) is ascertained,
- a correction value (K) is ascertained from the first power consumption ($P_1$) and the second power consumption ($P_2$),
- the correction value (K) is taken into consideration for the purpose of setting a set-point value (S) for the pressure difference ($\Delta p$).

3. The method according to claim 1 or claim 2, wherein a termination of the method occurs if a braking operation initiated by a driver of the vehicle and/or an automatic braking operation occurs.

4. The method according to any one of claims 1 to 3, wherein a termination of the method occurs if a braking operation is imminent.

5. The method according to any one of claims 1 to 4, wherein for the purpose of ascertaining the correction value (K) a ratio is derived from the first power consumption ($P_1$) and the second power consumption ($P_2$) and/or wherein for the purpose of ascertaining the correction value (K) a difference is derived from the first power consumption ($P_1$) and the second power consumption ($P_2$).

6. The method according to claim 5, wherein an existence of a system error is inferred if a value of the correction value (K) is ascertained that does not lie within a predetermined range.

7. The method according to any one of claims 1 to 6, wherein the first pressure difference ($\Delta p_1$) or the second pressure difference ($\Delta p_2$) is set to a value of an order of magnitude zero.

8. The method according to any one of claims 1 to 7, wherein the first time interval ($\Delta t_1$) and the second time interval ($\Delta t_2$) are of a same duration or of different duration.

9. The method according to any one of claims 1 to 8, wherein the pump (31) is driven in such a way that in the first time interval ($\Delta t_1$) and in the second time interval ($\Delta t_2$) a rate of delivery of a same magnitude is achieved or rates of delivery of differing magnitudes are achieved.

10. The method according to any one of claims 1 to 9, wherein the first and second power consumptions ($P_1$, $P_2$) are ascertained if in the respective first and second time intervals ($\Delta t_1$, $\Delta t_2$) the rate of delivery of the pump (31) is constant.

11. The method according to any one of claims 1 to 10, wherein the correction value (K) is compared with a reference value (R), and the set-point value (S) for the pressure difference ($\Delta p$) is set in such a way that the correction value (K) approximates to the reference value (R).

12. The method according to claim 11, wherein the comparison of the correction value (K) with the reference value (R) and the setting of the set-point value (S) for the pressure difference ($\Delta p$) are repeated until such time as the correction value (K) has approximated to the reference value (R) within a predetermined deviation (A).

13. The method according to claim 11 or claim 12, wherein the existence of a system error is inferred if the approximation of the correction value (K) to the reference value (R) has not occurred within a predetermined period of time and/or after a predetermined number of repetitions.

14. The method according to any one of claims 11 to 13, wherein the reference value (R) is predetermined in a manner depending on the first and/or second pressure difference ($\Delta p_1$, $\Delta p_2$).

15. An electrically controllable brake system for a motor vehicle, comprising

- a master brake cylinder (12);
- a wheel cylinder (50, 60);

- an electrically driven pump (31), which is adapted to generate a second brake pressure ($p_{KREIS}$);
- at least a first electrically driven valve arrangement (71) and at least a second electrically driven valve arrangement (51", 61"), wherein the at least first valve arrangement is adapted to set a pressure difference ($\Delta p$) between the second brake pressure and a brake pressure applied to the main brake cylinder and/or the second valve arrangement (51", 61") is adapted to set a pressure difference ($\Delta p$) between the second brake pressure and a brake pressure applied to the wheel cylinder; and
- an electronic control unit (ECU), wherein the electronic control unit is adapted
- in a first time interval ($\Delta t_1$) to set a predetermined pressure difference ($\Delta p_1$) and to ascertain an associated first power consumption ($P_1$) of the pump (31),
- in a second time interval ($\Delta t_2$) to set a predetermined second pressure difference ($\Delta p_2$) and to ascertain an associated second power consumption ($P_2$) of the pump (31),
- to ascertain a correction value (K) from the first power consumption ($P_1$) and the second power consumption ($P_2$), and
- to take the correction value (K) into consideration for the purpose of setting a set-point value (S) for the pressure difference ($\Delta p$).

## Revendications

1. Procédé pour faire fonctionner un système de freinage commandé électriquement destiné à un véhicule automobile et comportant un maître-cylindre de frein (12) pour générer une première pression de freinage ($p_{HZ}$), une pompe (31) commandée électriquement pour générer une deuxième pression de freinage ($p_{KREIS}$) et au moins un agencement de soupapes (71) commandé électriquement pour assurer le réglage d'une différence de pression ($\Delta p$) entre la deuxième pression de freinage et la première pression de freinage, **caractérisé en ce que**

    - il est, dans un premier intervalle de temps ($\Delta t_1$), procédé au réglage d'une première différence de pression ($\Delta p_1$) prédéterminée ainsi qu'à la détermination d'une première puissance ($P_1$) correspondante absorbée par la pompe (31),
    - il est, dans un deuxième intervalle de temps ($\Delta t_2$), procédé au réglage d'une deuxième différence de pression ($\Delta p_2$) prédéterminée ainsi qu'à la détermination d'une deuxième puissance ($P_2$) correspondante absorbée par la pompe (31),
    - il est calculé une valeur de correction (K) à partir de la première puissance absorbée ($P_1$) et de la deuxième puissance absorbée ($P_2$),
    - il est tenu compte de la valeur de correction (K) dans le réglage d'une valeur de consigne (S) pour la différence de pression ($\Delta p$).

2. Procédé pour faire fonctionner un système de freinage commandé électriquement destiné à un véhicule automobile et comportant des cylindres de roue (50, 60) dans lesquels est générée une première pression de freinage ($p_{RAD}$), une pompe (31) commandée électriquement pour générer une deuxième pression de freinage ($p_{KREIS}$) et au moins un agencement de soupapes (51", 61')' commandé électriquement pour assurer le réglage d'une différence de pression ($\Delta p$) entre la deuxième pression de freinage ($p_{KREIS}$) et la première pression de freinage ($p_{RAD}$), **caractérisé en ce que**

    - il est, dans un premier intervalle de temps ($\Delta t_1$), procédé au réglage d'une première différence de pression ($\Delta p_1$) prédéterminée ainsi qu'à la détermination d'une première puissance ($P_1$) correspondante absorbée par la pompe (31),
    - il est, dans un deuxième intervalle de temps ($\Delta t_2$), procédé au réglage d'une deuxième différence de pression ($\Delta p_2$) prédéterminée ainsi qu'à la détermination d'une deuxième puissance ($P_2$) correspondante absorbée par la pompe (31),
    - il est calculé une valeur de correction (K) à partir de la première puissance absorbée ($P_1$) et de la deuxième puissance absorbée ($P_2$),
    - il est tenu compte de la valeur de correction (K) dans le réglage d'une valeur de consigne (S) pour la différence de pression ($\Delta p$).

3. Procédé selon la revendication 1 ou 2, dans le cadre duquel ledit procédé est interrompu lorsqu'intervient un freinage déclenché par le conducteur du véhicule et/ou un freinage automatique.

4. Procédé selon l'une des revendications 1 à 3, dans le cadre duquel le procédé est interrompu lorsqu'un freinage est imminent.

**5.** Procédé selon l'une des revendications 1 à 4, dans le cadre duquel il est établi un rapport entre la première puissance absorbée ($P_1$) et la deuxième puissance absorbée ($P_2$) pour calculer la valeur de correction (K), et/ou il est, pour la valeur de correction (K) à calculer, formé une différence à partir de la première puissance absorbée ($P_1$) et de la deuxième puissance absorbée ($P_2$).

**6.** Procédé selon la revendication 5, dans le cadre duquel il est conclu à la présence d'une erreur de système lorsque la valeur calculée pour la valeur de correction (K) n'est pas comprise dans une plage prédéterminée.

**7.** Procédé selon l'une des revendications 1 à 6, dans le cadre duquel la première différence de pression ($\Delta p_1$) ou la deuxième différence de pression ($\Delta p_2$) est réglée à une valeur de l'ordre de zéro.

**8.** Procédé selon l'une des revendications 1 à 7, dans le cadre duquel le premier intervalle de temps ($\Delta t_1$) et le deuxième intervalle de temps ($\Delta t_2$) ont une durée identique ou une durée différente.

**9.** Procédé selon l'une des revendications 1 à 8, dans le cadre duquel la pompe (31) est commandée de sorte à obtenir, dans le premier intervalle de temps ($\Delta t_1$) et dans le deuxième intervalle de temps ($\Delta t_2$), un débit de refoulement identique ou des débits de refoulement différents.

**10.** Procédé selon l'une des revendications 1 à 9, dans le cadre duquel la première et la deuxième puissance absorbée ($P_1$, $P_2$) sont déterminées lorsque le débit de refoulement de la pompe (31) reste constant dans le premier et le deuxième intervalle de temps ($\Delta t_1$, $\Delta t_2$)

**11.** Procédé selon l'une des revendications 1 à 10, dans le cadre duquel la valeur de correction (K) est comparée à une valeur de référence (R) et la valeur de consigne (S) pour la différence de pression ($\Delta p$) est réglée de sorte que la valeur de correction (K) se rapproche de la valeur de référence (R).

**12.** Procédé selon la revendication 11, dans le cadre duquel la comparaison de la valeur de correction (K) à la valeur de référence (R) et le réglage de la valeur de consigne (S) pour la différence de pression ($\Delta p$) sont répétés jusqu'à ce que la valeur de correction (K) comprise dans une plage de variation prédéterminée se soit rapprochée de la valeur de référence (R).

**13.** Procédé selon la revendication 11 ou 12, dans le cadre duquel il est conclu à la présence d'une erreur de système lorsque la valeur de correction (K) ne s'est pas rapprochée de la valeur de référence (R) au cours d'une période de temps prédéterminée et/ou après un nombre de répétitions prédéterminé.

**14.** Procédé selon l'une des revendications 11 à 13, dans le cadre duquel la valeur de référence (R) est prédéterminée en fonction de la première et/ou de la deuxième différence de pression ($\Delta p_1$, $\Delta p_2$).

**15.** Système de freinage commandé électriquement pour un véhicule automobile, comportant

- un maître-cylindre de frein (12),
- un cylindre de roue (50, 60),
- une pompe commandée électriquement (31) qui est conçue pour générer une deuxième pression de freinage ($p_{KREIS}$),
- au moins un premier agencement de soupapes (71) commandé électriquement et au moins un deuxième agencement de soupapes (51", 61") commandé électriquement, ledit au moins un premier agencement de soupapes (71) étant conçu pour assurer le réglage d'une différence de pression ($\Delta p$) entre la deuxième pression de freinage et la pression de freinage présente dans le maître-cylindre de freinage, et/ou le deuxième agencement de soupapes (51", 61") étant conçu pour assurer le réglage d'une différence de pression ($\Delta p$) entre la deuxième pression de freinage et une pression de freinage présente dans le cylindre de roue, et
- une unité de commande électronique (ECU), cette unité de commande électronique étant conçue
- pour régler, dans un premier intervalle de temps ($\Delta t_1$), une première différence de pression ($\Delta p_1$) prédéterminée et déterminer une première puissance ($P_1$) correspondante absorbée par la pompe (31),
- pour régler, dans un deuxième intervalle de temps ($\Delta t_2$), une deuxième différence de pression ($\Delta p_2$) prédéterminée et déterminer une deuxième puissance ($P_2$) correspondante absorbée par la pompe (31),
- pour calculer une valeur de correction (K) à partir de la première puissance absorbée ($P_1$) et de la deuxième

puissance absorbée ($P_2$),
- pour prendre en compte la valeur de correction (K) dans le réglage d'une valeur de consigne (S) pour la différence de pression ($\Delta p$).

Fig. 1

EP 2 598 387 B1

Fig. 2

EP 2 598 387 B1

**S1**
Stelle $\Delta p_1$ ein
und ermittle $P_1$

**S2**
Stelle $\Delta p_2$ ein
und ermittle $P_2$

**S4b**
Verringere S

**S4a**
Erhöhe S

**S3**
Ermittle K

**S4**

K > R-A    N

J

N    K < R+A

J

**S5**
Speichere K

**Fig. 3**

**Fig. 4**

ECU

EP 2 598 387 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10247651 A1
- DE 4439890 A1
- DE 102005026740 A1
- WO 9519282 A1
- DE 102006029160 A1
- DE 10221456 A1
- WO 2005054028 A1